## Europäisches Patentamt
## European Patent Office
## Office européen des brevets

(11) Veröffentlichungsnummer: **0 261 628 B1**

(12) **EUROPÄISCHE PATENTSCHRIFT**

(45) Veröffentlichungstag der Patentschrift: **02.05.91**

(51) Int. Cl.⁵: **G06F 9/38**

(21) Anmeldenummer: **87113788.1**

(22) Anmeldetag: **21.09.87**

(54) Vorausladeeinrichtung zum mikroprogrammierten und verdeckten Bereitstellen von Maschinenbefehlen in einem Prozessor.

(30) Priorität: **26.09.86 DE 3632873**

(43) Veröffentlichungstag der Anmeldung:
**30.03.88 Patentblatt 88/13**

(45) Bekanntmachung des Hinweises auf die
Patenterteilung:
**02.05.91 Patentblatt 91/18**

(84) Benannte Vertragsstaaten:
**AT BE CH DE ES FR GB IT LI NL SE**

(56) Entgegenhaltungen:
**US-A- 4 316 244**

**PATENT ABSTRACTS OF JAPAN, Band 8, Nr.
27 (P-252)[1464], 4. Februar 1984; & JP-A-58
181 146 (NIPPON DENKI K.K.) 22-10-1983**

**IBM TECHNICAL DISCLOSURE BULLETIN,
Band 22, Nr. 7, Dezember 1979, Seiten
2649-2650, New York, US; J.C. LEININGER:
"Microprocessor performance enhancement
by pre-decoding"**

**IBM DISCLOSURE BULLETIN, Band 24, Nr.
11B, April 1982, Seiten 6109-6111, New York,
US; K.J. GETZLAFF et al.: "Instruction buffer**
addressing"

**IBM TECHNICAL DISCLOSURE BULLETIN,
Band 18, Nr. 11, April 1976, Seiten 3705-3706,
New York, US; F.J. AICHELMANN et al.:
"Automatic memory select during I-fetch
operations"**

(73) Patentinhaber: **Siemens Aktiengesellschaft
Wittelsbacherplatz 2
W-8000 München 2(DE)**

(72) Erfinder: **Kock, Jürgen, Ing. grad.
Basler Strasse 68
W-8000 München 71(DE)**

EP 0 261 628 B1

**Beschreibung**

Die Erfindung bezieht sich auf eine Vorausladeeinrichtung zum mikroprogrammierten und verdeckten Bereitstellen von Maschinenbefehlen in einem Prozessor mit mehreren an ein prozessorinternes Bussystem anschließbaren Funktionseinheiten.

Diese Funktionseinheiten sind regelmäßiger Bestandteil der oben genannten Prozessoren. Dies ist beispielsweise aus U. Appel, "Mikrocomputer und Minicomputer", Oldenbourg Verlag München Wien, 1981, Kapitel 5 bekannt. Bestandteil eines Prozessors sind demnach ein Rechenwerk mit nachfolgendem Ringschieber, mehrere Registerspeicher und ein Mikrobefehlssequenzer mit Mikrobefehlsspeicher.

Ferner sind aus IBM Disclosure Bulletin, Band 24, Nr. 11B, 1982, Seiten 6109 bis 6111; K.j. Getzlaff et al.: "Instruction Buffer Adressing" weitere Merkmale des oben gennanten Prozessors bekannt. Es ist die Adressierung einer Vorausladeeinrichtung beschrieben, die mit zwei parallelen, alternierend ladbaren, jeweils mehrere Maschinenbefehle aufnehmenden Wechselpuffern arbeitet. Diese Wechselpuffer sind in die Verbindung zwischen einem Arbeitsspeicher und den Operationsregistern des Prozessors eingeschaltet. Die Ansteuerung der Wechselpuffer erfolgt über einen steuerbaren Befehlszähler und einen Vorausladebefehlszähler. Die Inhalte jedes der Wechselpuffer werden jeweils gemeinsam zu einem definierten Zeitpunkt zu den Operationsregistern ausgegeben.

Im Bestreben, die Arbeitsgeschwindigkeit von Prozessoren zu erhöhen, sind verschiedene Maßnahmen bekannt geworden, zu denen beispielsweise die Parallelarbeit und die Fließbandarbeit bzw. die überlappte Arbeitsweise gehören (s. Elektronische Rechenanlagen, 1973, Heft 2, Seiten 60 bis 65). Überlappung bedeutet, daß die "Lebensdauer" eines jeweils nächsten Befehles bereits beginnt, ehe die "Lebensdauer" vorangehende Befehle geendet hat. Eine optimale Überlappung ist dabei dann gegeben, wenn aufeinanderfolgende Befehle jeweils um eine Befehlsphase gegeneinander versetzt sind. Dieser ideale Ablauf ist jedoch in der Praxis nur selten realisierbar, weil verschiedene Störereignisse zwischendurch immer wieder eine Verzögerung verursachen. Eines dieser Störereignisse sind die sogenannten Sprungbefehle, weil dann die Adressen der Folgebefehle nicht rechtzeitig bekannt sind, was zwangsläufig zu Verzögerungen im Befehlsablauf führt.

Der vorliegenden Erfindung liegt nun die Aufgabe zugrunde, einen Prozessor mit Befehlspuffer so aufzubauen, daß sowohl Einsprungadressen als auch Operandenadressen und Konstanten/Masken möglichst ohne Laufzeit, d.h. ohne Verzögerung, erzeugt werden können. Insbesondere soll der Einsprung in die Emulationsroutinen ohne Laufzeit durchgeführt werden können.

Diese Aufgabe wird erfindungsgemäß durch die kennzeichnenden Merkmale des Anspruchs 1 gelöst.

Mit einer derart aufgebauten Befehlspipeline kann die Einsprungadresse für den Sequenzer schon zu einem Zeitpunkt ausgenutzt werden, wenn die Registeradressen und die Konstanten aus der Feldaufbereitung noch nicht bereitgestellt sind. Dies ist deshalb möglich, weil letztere erst während der Emulationsroutine benutzt werden.

Vorteilhafte Weiterbildungen der Erfindung sind in den Unteransprüchen angegeben.

Im folgenden wird ein Ausführungsbeispiel der Erfindung anhand der Zeichnungen näher erläutert. Dabei zeigen

FIG 1 den prinzipiellen Aufbau des Prozessors gemäß der Erfindung,

FIG 2 den detaillierten Aufbau einer Befehls-Pipeline in der Speicherbus-Anschlußeinheit gemäß FIG 1,

FIG 3 ein Beispiel für einen Mikrobefehl,

FIG 4 ein Beispiel für die Emulation von Maschinenbefehlen anhand einer Mikrobefehlsfolge mit entsprechender Zuordnung der einzelnen Befehle zu den verschiedenen Funktionseinheiten des Prozessors sowie anhand eines Zeitdiagramms.

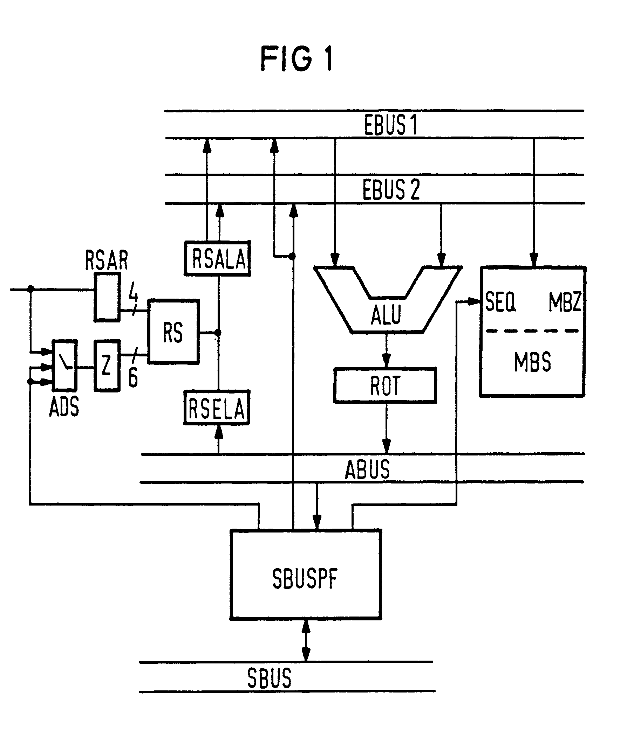

Die FIG 1 zeigt die wesentlichen Funktionseinheiten eines gemäß der Erfindung aufgebauten Prozessors. Dieser Prozessor besteht im einzelnen aus einer Rechen- und Steuereinheit ALU mit nachfolgendem Ringschieber ROT, einem Mikrobefehlssequenzer SEQ mit Mikrobefehlszähler MBZ, einem Mikrobefehlsspeicher MBS, einem die Verbindung zum Arbeitsspeicher herstellenden Speicherbus SBUS mit zugehörigem Speicherbus-Befehlspuffer SBUSPF und einem Registerspeicher RS. Die einzelnen Funktionseinheiten sind über ein prozessorinternes Bussystem, bestehend aus einem ersten und zweiten Eingangsbus EBUS1, EBUS2 und einem Ausgangsbus ABUS, miteinander verbunden. Zwischen dem Ausgangsbus ABUS und dem Dateneingang des Registerspeichers RS ist eine zustandsgesteuerte Kippstufe RSELA vorgesehen. Der Datenausgang des Registerspeichers RS ist mit dem Eingang einer zweiten zustandsgesteuerten Kippstufe RSALA verbunden, die ausgangsseitig sowohl mit dem ersten als auch mit dem zweiten Eingangsbus EBUS1, EBUS2 verbunden ist. Zwei Eingangsbusse EBUS1, EBUS2 sind deshalb vorgesehen, um dem Rechen- und Steuerwerk ALU gleichzeitig zwei Operanden anbieten zu kön nen. Die Adressierung des Registerspeichers RS erfolgt über ein zweigeteiltes Adressregister, bestehend aus dem Teilregister

2

RSAR zur Auswahl eines Registersatzes und einem Zähler Z zur Auswahl eines Registers innerhalb eines ausgewählten Registersatzes. Dem Zähler Z ist eingangsseitig ein Adreßschalter ADS vorgeschaltet, der entweder Teile des Mikrobefehls oder Operandenadressen aus den Registerstufen N oder N + 1 des Speicherbuspuffers SBUSPF an den Zähler Z durchschaltet. Über Subfunktionen im Mikrobefehl kann entweder die Bedienung des Adreßschalters ADS oder die Zählfunktion des Zählers Z gesteuert werden.

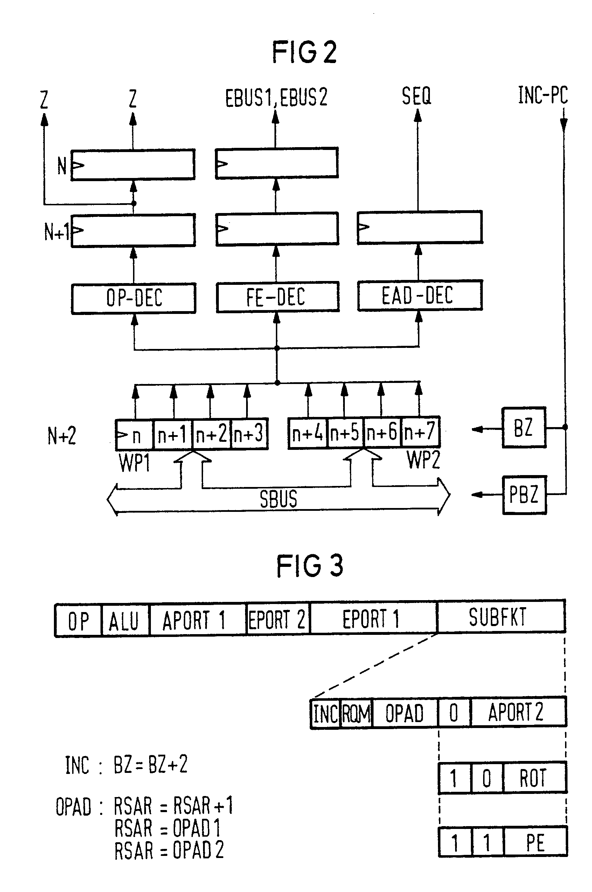

Einzelheiten des Speicherbus-Puffers SBUSPF ergeben sich aus dem Blockschaltbild der FIG 2. Diese FIG 2 zeigt zwei Wechselpuffer WP1, WP2 mit jeweils acht Byte, die aus dem Speicherbus SBUS alternierend mit jeweils vier Maschinen-Befehlen n, n + 1, n + 2, n + 3 bzw. n + 4, n + 5, n + 6, n + 7 ladbar sind. Die jeweils zwei Byte breiten Ausgänge der beiden Wechselpuffer WP1, WP2 werden zyklisch durchgeschaltet, wobei jeweils ein Ausgang mit drei parallelen Decodierlogikschaltungen OP-DEC, FE-DEC, EAD-DEC verbunden wird. Diese drei Decodierlogikschaltungen OP-DEC, FE-DEC, EAD-DEC bilden die Eingänge für drei ein- oder mehrstufige Befehlspuffer, die jeweils den Operandenadressen, der Feldaufbereitung (d.h. Konstanten, Masken, Bitnummern, Sprungdistanzen) und den Einsprungadressen für die Emulationsroutinen zugeordnet sind. Die den Befehlspuffern zugeordneten Register einschließlich der beiden Wechselpuffer werden durch einen Befehlszähler BZ und durch einen Vorauslade-Befehlszähler PBZ gesteuert. Da jeder der beiden Wechselpuffer WP1, WP2 nach jedem abgeschlossenen Zyklus innerhalb des jeweiligen Wechselpuffers mit vier neuen Mikrobefehlen zu je zwei Byte geladen wird, zählt der Vorauslade-Befehlszähler PBZ bei jedem Ladevorgang um acht höher. Außerdem wird der Befehlszähler BZ nach jeder Übernahme eines Maschinen-Befehls aus einem der beiden Wechselpuffer WP1, WP2 (Stufe N + 2) in die Eingangsregister der drei Befehlspuffer (Stufe N + 1) um zwei erhöht. Gesteuert wird dies jeweils mit der im Mikrobefehl enthaltenen Subfunktion INC-PC. Bei Sprungbefehlen wird die Vorausladelogik neu initialisiert und der Befehlspuffer entwertet. Jedes Mal, wenn im Mikrobefehl das Bit bzw. die Subfunktion INC-PC auftaucht, wird der Befehlspuffer automatisch um eine Stufe weitergeschoben, wobei die codierten Daten in die Stufe N + 1 übernommen werden. In dieser Stufe N + 1 steht sowohl die Einsprungadresse für den Sequenzer SEQ als auch die zuerst benötigte Operandenadresse für den Registerspeichers RS (siehe FIG 1) bereits zur Verfügung. Damit kann der Sequenzer in die Emulationsroutine einspringen, während der Registerspeicher bereits für die folgende Emulationsroutine adressiert werden kann. In der nächsten Stufe N stehen dann auch weitere Operandenadressen und die Konstanten aus der Feldaufbereitung zur Verfügung, die erst während der Emulationsroutine benötigt werden. Die stufenweise Fortschaltung erfolgt parallel in den drei Befehlspuffern mit dem jeweils gleichen Befehl in jeder Stufe. Je nach Art des Befehls wird entweder die Operandenadresse zur Adressierung des Registerspeichers verwendet und/oder z.B. eine Konstante aus dem Feld an einen der beiden Eingangsbusse EBUS1, EBUS2 übergeben.

Die FIG 3 zeigt anhand eines Beispiels die verschiedenen Felder eines Mikrobefehls. Über das Feld OP wird gesteuert, ob ein Emulationssprung (GO-EPLA) ausgeführt werden soll und ob alle dafür notwendigen Register geladen werden sollen (EMUL = NEXT). APORT1, EPORT2, EPORT1, APART2 sind die Adressen für die E-PORTS und A-PORTS, z.B. im Registerspeicher RS. Im Feld Subfunktion SUBFKT ist am Beginn ein Bit INC enthalten, das den Befehlszähler BZ und den Vorauslade-Befehlszähler PBZ (siehe FIG 2) steuert. Ein weiteres Bit RQM steuert den Speicherzyklus für Datenzugriffe zum Speicher, zwei weitere Bits OPAD dienen zur Operandenadressierung im Registerspeicher RS. ROT bedeutet eine Bitverschiebung im Ringschieber ROT um bei spielsweise 1, 4, 8, 16 Bit nach rechts. PE ist eine Lese- oder Schreibanforderung für den Peripheriebus.

Im folgenden wird eine Mikrobefehlsfolge als Beispiel für die Emulation zweier aufeinanderfolgender Maschinenbefehle (ADD und SUB) angegeben. Die Phase INIT wurde nur zum besseren Verständnis vorangestellt.

```
INIT:       PC = 2n;;
INIT+1      INC-PC;  EMUL=NEXT; RSAR=OPLA1; GO-EPLA;;
ADD:        RØ = RS; RSAR=OPLA2;;
ADD+1       RS=RØ + RS; RSAR=OPLA3;;
ADD+2       AZØ-1=ZWEI ≠ FLAG16; EMUL=NEXT;
            RSAR=OPLA1; INC-PC; GO-EPLA;;
SUB:        RØ=RS; RSAR=OPLA2;;
```

Mit der Initialisierung INIT wird zunächst der Befehlszähler BZ mit einer geraden Adresse, d.h. mit PC = 2n geladen. Als nächstes wird mit INC-PC der Befehlspuffer um eine Stufe weitergeschoben. EMUL = NEXT bedeutet eine Anweisung an den Sequenzer SEQ, einen Emulationssprung (GO-EPLA) vorzubereiten, d.h. er soll mit EMUL = NEXT alle dazu notwendigen Register laden, indem er den Inhalt der Register der Stufe N + 1 in die Stufe N des Befehlspuffers bzw. den Inhalt aus einem Abschnitt des Wechselpuffers WP von der Stufe N + 2 in die Register der Stufe N + 1 des Belegpuffers übernimmt. RSAR = OPLAI schließlich bedeutet, daß der Registerspeicheradresszähler Z mit der Operandenadresse 1 geladen werden soll und zwar für den nächsten Befehl.

Mit dem Einsprung in die Emulationsroutine folgt als einfaches Beispiel eine Addition ADD. Dabei soll im Registerspeicher RS der Inhalt eines ersten Registers mit dem Inhalt eines zweiten Registers addiert und die Summe in ein drittes Register übertragen werden. Im ersten Mikrobefehl der ADD-Routine wird der erste Operand in ein Hilfsregister RØ zwischengespeichert und gleichzeitig der zweite Operand adressiert (OPLA2). Im zweiten Mikrobefehl ADD + 1 der ADD-Routine werden Operand 1 und Operand 2 addiert und das Ergebnis in der zustandsgesteuerten Eingangskippstufe RSELA des Registerspeichers RS zwischengespeichert und gleichzeitig der Registerspeicher RS mit der Operandenadresse 3 adressiert. Im dritten und letzten Mikrobefehl ADD + 2 der ADD-Routine werden relevante Anzeigenbits in ein Anzeigenregister gespeichert, der Inhalt der Eingangskippstufe RSELA in den Registerspeicher RS geschrieben (in der ersten Hälfte des Mikrobefehls), der Registerspeicher für die nächste Emulationsroutine neu adressiert (in der zweiten Hälfte des Mikrobefehls), alle notwendigen Register für die nächste Emulationsroutine geladen, der Befehlszähler erhöht und ein Mikroprogrammsprung zur nächsten Emulationsroutine durchgeführt.

Der erste Mikrobefehl SUB der folgenden SUB-Routine entspricht wieder dem ersten Mikrobefehl der vorangegangenen ADD-Routine.

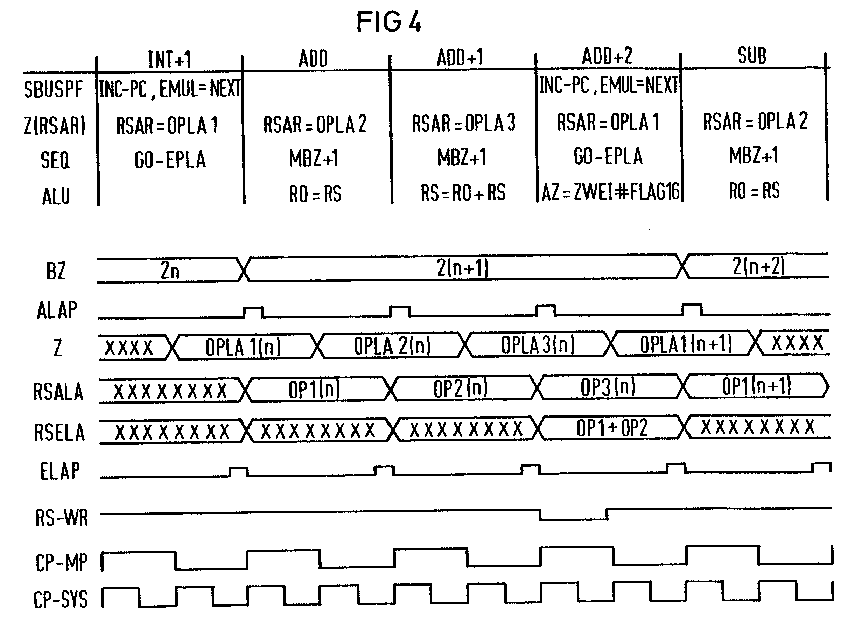

Aus der Tabelle im oberen Teil der FIG 4 ist ersichtlich, wie sich die einzelnen Mikrobefehle der Mikrobefehlsfolge nach dem beschriebenen Beispiel auf die verschiedenen Funktioneinheiten des Prozes- sors, und zwar auf den Speicherbus-Befehlspuffer SBUSPF, auf den Zähler Z am Adresseingang des Registerspeichers RS, auf den Mikrobefehlssequenzer SEQ und auf die Rechen- und Steuereinheit ALU auswirken.

Das im unteren Teil der FIG 4 dargestellte Zeitdiagramm zeigt in der ersten Zeile die Adressen der zu emulierenden Befehle, mit denen der Befehlszähler BZ geladen wird. Die zustandsgesteuerten Eingangs- und Ausgangskippstufen RSELA, RSALA des Registerspeichers RS werden am Ende des aktuellen Mikrobefehls (siehe die Impulsfolge ELAP) bzw. am Anfang des nächsten Mikrobefehls (siehe die Impulsfolge ALAP) gesetzt. Das Zeitdiagramm zeigt ferner, daß der Registerspeicher RS in der Mitte des laufenden Mikrobefehls einer Emulationsroutine mit der im Zähler Z vorhandenen Adresse bereits für den nächsten Maschinenbefehl adressiert wird. Gemäß dem dargestellten Beispiel soll der Befehl n emuliert werden, wobei der Registerspeicher RS zunächst mit der Adresse OPLA1 (n) des ersten Operanden adressiert wird. Dieser erste Operand OP1 (n) wird dann am Ende des Mikrobefehls in die zustandsgesteuerten Ausgangskippstufe RSALA übernommen und steht damit für den ersten Mikrobefehls der Emulationsroutine zur Verfügung. Gleich im Anschluß daran wird der Registerspeicher RS mit der Adresse OPLA2 (n). für den zweiten Mikrobefehl ADD adressiert und dementsprechend steht am Ende dieses Mikrobefehls auch der zweite Operand OP2 (n) zur Verfügung. Der in einem Hilfsregister RØ stehende erste Operand OP1 und der in der Ausgangskippstufe RSALA bereitstehende zweite Operand OP2 werden nun addiert. Diese Addition geschieht in der Rechen- und Steuereinheit ALU am Ende des dritten Mikrobefehls ADD + 1, bei dem der Registerspeicher mit der Adresse OPLA3 (n) für den dritten Operanden OP3 (n) adressiert wird. Das Ergebnis dieser Addition OP1 + OP2 wird nun mit dem nächsten Kippstufenpuls ELAP in die Eingangskippstufe RSELA übernommen. Schließlich wird mit dem zu Beginn des vierten Mikrobefehls ADD + 2 auftretendem Schreibimpuls RS-WR das Additionsergebnis sowohl in den Registerspeicher RS geschrieben als auch mit dem Impuls ALAP in die Ausgangskippstufe RSALA übernommen. Es würde dann bereits für den nächsten Mikrobefehl zur Verfügung stehen. Dieser Registerspeicher RS erscheint damit wie die Summe flankengesteuerter Einzelregister.

Wie das Zeitdiagramm zeigt, ist der Schreibimpuls RS-WR bereits vor der Mitte des Mikroprozessortaktes CP-MP zu Ende, so daß ab diesem Zeitpunkt schon wieder für den nächsten Befehl adressiert werden kann. Der Mikroprozes sortakt CP-MP wird im übrigen durch Frequenzteilung 1:2 aus dem Systemtakt CP- SYS gewonnen. Dies ist insofern wichtig, weil dann in der Mitte des Mikrobefehls eine Taktflanke für die Adressierung des Registerspeichers zur Verfügung steht.

**Ansprüche**

1. Vorausladeeinrichtung zum mikroprogrammierten und verdeckten Bereitstellen von Maschinenbefehlen
   - in einem Prozessor mit mehreren an ein prozessorinternes Bussystem (EBUS1,EBUS2,ABUS) anschließbaren Funktionseinheiten wie ein Rechenwerk (ALU) mit nachfolgendem Ringschieber- (ROT), Registerspeicher(RS), Mikrobefehlssequenzer (SEQ) mit Mikrobefehlsspeicher (MBS)
   - mit einem zwischen einem die Verbindung zu einem Arbeitsspeicher herstellenden Speicherbus (SBUS) und dem Prozessor eingeschaltetem Befehlspuffer (SBUSPF), dem je ein, durch Steuerbits im Mikrobefehl steuerbarer Befehlszähler (BZ) und ein Vorauslade-Befehlszähler (PBZ) zugeordnet sind,
   - wobei im Befehlspuffer (SBUSPF) in einer ersten Registerstufe (N + 2) zwei parallele, jeweils mehrere zwei Byte breite Maschinenbefehle (n,n + 1,...n + 7) aufnehmende Wechselpuffer (WP1,WP2) vorgesehen sind, die alternierend aus dem Speicherbus (SBUS) ladbar sind,
   - wobei diese Maschinenbefehleauf die jeweils zwei Byte breiten Ausgänge der beiden Wechselpuffer (WP1,WP2) zyklisch durchschaltbar sind und jeweils nur ein Ausgang eines Wechselpuffers mit den Eingängen von drei parallel zueinander angeordneten Dekodierlogikschaltungen (OP-DEC,FE-DEC,EAD-DEC) verbunden ist,
   - wobei die Ausgänge der den Registerspeicheradressen, den Konstanten bzw. Masken oder Bitnummern und den Mikrobefehlsspeicheradressen zugeordneten Dekodierlogikschaltungen (OP-DEC,FE-DEC,EAD-DEC) mit je einem Register einer nächsten Registerstufe (N + 1) verbunden sind,
   - wobei der Ausgang des in dieser Registerstufe (N + 1) den Registerspeicheradressen zugeordneten Registers sowohl mit dem Adressregister (Z) des Registerspeichers (RS) als auch mit einem Register einer weiteren Registerstufe (N) verbunden ist,
   - wobei das den Konstanten bzw. Masken oder Bitnummern zugeordnete Register dieser nächsten Registerstufe (N + 1) mit einem Register einer weiteren Registerstufe (N) verbunden ist,
   - wobei das den Mikrobefehlsspeicheradressen zugeordnete Register in der Registerstufe (N + 1) direkt mit dem Adresseingang des Mikrobefehlssequenzers (SEQ) verbunden ist
   - und wobei die Ausgänge der den Registerspeicheradressen bzw. den Konstanten zugeordneten Register in der Registerstufe (N) direkt mit dem Adressregister (Z) des Registerspeichers (RS) bzw. mit dem Eingangsbus (EBUS) des prozessorinternen Bussystems verbunden sind.

2. Vorausladeeinrichtung nach Anspruch 1,
   **dadurch gekennzeichnet,** daß das Adressregister des Registerspeichers (RS) aus einem Teiladressregister (RSAR) und aus einem dazu parallelen Adresszähler (Z) besteht.

3. Vorausladeeinrichtung nach Anspruch 2,
   **dadurch gekennzeichnet,** daß dem Eingang des Adresszählers (Z) über einen Auswahlschalter (ADS), abhängig vom jeweiligen Mikrobefehl, entweder Teile des Mikrobefehls oder, durch im Mikrobefehl enthaltene Subfunktionen steuerbar, Registerspeicheradressen aus der Registerstufe (N) bzw. aus der Registerstufe (N + 1) zuführbar sind.

4. Vorausladeeinrichtung nach einem der vorhergehenden Ansprüche,
   **dadurch gekennzeichnet,** daß der Ausgangsbus (ABUS) des Prozessors über eine zustandsgesteuerten Eingangs-Kippstufe (RSELA) und die Eingangsbusse (EBUS1,EBUS2) über zustandsgesteuerte Ausgangskippstufen (RSALA) mit dem gemeinsamen Ein- und Ausgang des Registerspeichers (RS) verbunden sind.

5. Vorausladeeinrichtung nach einem der vorhergehenden Ansprüche,
   **dadurch gekennzeichnet,** daß der Adresseingang des Registerspeichers (RS) durch den Mikroprozessortakt (CP-MP) derart gesteuert ist, daß bereits in der Mitte des aktuellen Mikrobefehls eine Adressierung für den nächsten Maschinenbefehl erfolgt.

## Claims

1. Prefetch apparatus for the overlapped microprogrammed supply of machine instructions
   - in a processor having a plurality of functional units which can be connected to an internal processor bus system (EBUS1,EBUS2,ABUS), such as an arithmetic unit (ALU) with a following logic shift unit (ROT), register memory (RS), microinstruction sequencer (SEQ) with microinstruction memory (MBS),

- having an instruction buffer (SBUSPF) inserted between a memory bus (SBUS) making the connection to a main memory and the processor, to which instruction buffer in each case an instruction counter (BZ), which can be controlled by control bits in the microinstruction, and a prefetch instruction counter (PBZ) are assigned,

- two parallel alternating buffers (WP1,WP2), which receive in each case several two-byte wide machine instructions (n,n + 1,...n + 7), being provided in the instruction buffer (SBUSPF) in a first register stage (N + 2), which alternating buffers can be loaded alternately from the memory bus (SBUS),

- it being possible to switch these machine instructions cyclically through to the in each case two-byte wide outputs of the two alternating buffers (WP1,WP2), and in each case only one output of an alternating buffer being connected to the inputs of three decoding logic circuits (OP-DEC,FE-DEC,EAD-DEC) arranged in mutually parallel fashion,

- the outputs of the decoding logic circuits (OP-DEC,FE-DEC,EAD-DEC) assigned to the register memory addresses, the constants or masks or bit numbers and the microinstruction memory addresses being connected to in each case one register of a next register stage (N + 1),

- the output of the register, assigned to the register memory addresses in this register stage (N + 1), being connected both to the address register (Z) of the register memory (RS) and to a register of a further register stage (N),

- the register, assigned to the constants or masks or bit numbers, of this next register stage (N + 1) being connected to a register of a further register stage (N),

- the register, assigned to the microinstruction memory addresses, in the register stage (N + 1) being connected directly to the address input of the microinstruction sequencer (SEQ),

- and the outputs of the registers, assigned to the register memory addresses or the constants, in the register stage (N) being connected directly to the address register (Z) of the register memory (RS) or to the input bus (EBUS) of the internal processor bus system.

2. Prefetch apparatus according to Claim 1, characterised in that the address register of the register memory (RS) consists of an address subregister (RSAR) and of an address counter (Z) parallel thereto.

3. Prefetch apparatus according to Claim 2, characterised in that, depending on the respective microinstruction, either parts of the microinstruction or, controllable by subfunctions contained in the microinstruction, register memory addresses from the register stage (N) or from the register stage (N + 1) can be fed to the input of the address counter (Z) via a selection switch (ADS).

4. Prefetch apparatus according to one of the preceding claims, characterised in that via a level-operated input trigger element (RSELA) the output bus (ABUS) of the processor, and via level-operated output trigger elements (RSALA) the input busses (EBUS1,EBUS2) are connected to the common input and output of the register memory (RS).

5. Prefetch apparatus according to one of the preceding claims, characterised in that the address input of the register memory (RS) is controlled by the microprocessor clock (CP-MP) in such a way that an addressing for the next machine instruction is carried out already in the middle of the current microinstruction.

## Revendications

1. Dispositif de préextraction pour la préparation microprogrammée et masquée d'instructions machine
   - dans un processeur comportant plusieurs unités fonctionnelles pouvant être raccordées à un système formant bus (EBUS1,EBUS2,ABUS) interne au microprocesseur, ainsi qu'une unité de calcul (ALU) en aval de laquelle sont branchés un dispositif de décalage circulaire (ROT), une mémoire de registres (RS), et des séquenceurs de micro-instructions (SEQ) contenant des mémoires de micro-instructions (MBS),
   - un tampon d'instructions (SBUSPF), qui est branché entre un bus de mémoire (SBUS) établissant la liaison avec une mémoire de travail et le processeur et à laquelle sont associés respectivement un compteur d'instructions (BZ), qui peut être commandé par des bits de commande situés dans la micro-instruction, et un compteur d'instructions de préextraction (PBZ),
et dans lequel

- dans le tampon d'instructions (SBUSPF) sont prévus, dans un premier étage de registres (N + 1), deux tampons alternatifs parallèles (WP1,WP2), qui reçoivent respectivement plusieurs instructions machine (n,n + 1,... n + 7) possédant une largeur de deux octets et peuvent être chargés alternativement à partir du bus de mémoire (SBUS),
- ces instructions machine peuvent être transmises directement cycliquement aux sorties, possédant chacune une largeur de deux octets, des deux tampons alternatifs (WP1, WP2), et respectivement seule une sortie d'un tampon alternatif est reliée aux entrées de trois circuits logiques de décodage (OP-DEC,FE-DEC,EAD-DEC) branchés en parallèle,
- les sorties des circuits logiques de décodage (OP-DEC,FE-DEC, EAD-DEC), associées aux adresses de la mémoire de registres, aux constantes ou aux masques ou aux numéros de bits et aux adresses de la mémoire de micro-instructions, sont reliées respectivement à un registre d'un étage de registres (N + 1) immédiatement suivant,
- la sortie du registre associé aux adresses de la mémoire de registres dans cet étage de registres (N + 1) étant raccordée aussi bien au registre d'adresses (z) de la mémoire de registres (RS) qu'à un registre d'un autre étage de registre (N),
- le registre, qui est associé aux constantes ou aux masques ou aux numéros de bits, de cet étage de registres (N + 1) immédiatement suivant est raccordé à un registre d'un autre étage de registre (N),
- le registre associé aux adresses de la mémoire de micro-instructions et situé dans l'étage de registres (N + 1) est relié directement à l'entrée d'adresses du séquenceur de micro-instructions (SEQ), et
- les sorties des registres associés aux adresses de la mémoire de registres ou aux constantes et situés dans l'étage de registre (N) sont raccordées directement au registre d'adresses (Z) de la mémoire de registres (RS) ou au bus d'entrée (EBUS) du système de bus interne au processeur.

2. Dispositif de préextraction suivant la revendication 1, caractérisé par le fait que le registre d'adresses de la mémoire de registres (RS) est constitué par un registre partiel d'adresses (RSAS) et par un compteur d'adresses (Z) branché en parallèle avec ce registre.

3. Dispositif de préextraction suivant la revendication 2, caractérisé par le fait que soit des parties de la micro-instruction respective, soit, d'une manière pouvant être commandée par des fonctions secondaires contenues dans la micro-instruction, des adresses de la mémoire de registres tirées de l'étage de registres (N) ou de l'étage de registre (N + 1), peuvent être envoyées à l'entrée du compteur d'adresses (Z) par l'intermédiaire d'un commutateur de sélection (ADS), en fonction de la micro-instruction.

4. Dispositif de préextraction suivant l'une des revendications précédentes, caractérisé par le fait que le bus de sortie (ABUS) du processeur est raccordé par l'intermédiaire d'un étage à bascule d'entrée (RSELA), dont l'état est commandé, et les bus d'entrée (EBUS1,EBUS2) par l'intermédiaire d'étages à bascule de sortie (RSALA), dont l'état est commandé, à l'entrée commune et à la sortie commune de la mémoire de registres (RS).

5. Dispositif de préextraction suivant l'une des revendications précédentes, caractérisé par le fait que l'entrée d'adresses de la mémoire de registres (RS) est commandée par la cadence (CP-MP) du microprocesseur de telle sorte qu'un adressage pour l'instruction machine immédiatement suivante s'effectue déjà au milieu de l'actuelle micro-instruction.

# FIG 1

# FIG 2

# FIG 3

INC : BZ = BZ+2

OPAD : RSAR = RSAR+1
RSAR = OPAD 1
RSAR = OPAD 2

## FIG 4

|  | INT+1 | ADD | ADD+1 | ADD+2 | SUB |
|---|---|---|---|---|---|
| SBUSPF | INC-PC, EMUL=NEXT |  |  | INC-PC, EMUL=NEXT |  |
| Z(RSAR) | RSAR = OPLA 1 | RSAR = OPLA 2 | RSAR = OPLA 3 | RSAR = OPLA 1 | RSAR = OPLA 2 |
| SEQ | GO-EPLA | MBZ+1 | MBZ+1 | GO-EPLA | MBZ+1 |
| ALU |  | RO = RS | RS = RO + RS | AZ = ZWEI # FLAG16 | RO = RS |

BZ: 2n — 2(n+1) — 2(n+2)

ALAP

Z: XXXX — OPLA 1(n) — OPLA 2(n) — OPLA 3(n) — OPLA1 (n+1) — XXXX

RSALA: XXXXXXXX — OP1(n) — OP2(n) — OP3(n) — OP1(n+1)

RSELA: XXXXXXXX — XXXXXXXX — XXXXXXXX — OP1+OP2 — XXXXXXXX

ELAP

RS-WR

CP-MP

CP-SYS

EP 0 261 628 B1